# EUROPEAN PATENT SPECIFICATION

(11) **EP 2 921 091 B1**
(45) Date of publication and mention of the grant of the patent: **28.06.2017**
(21) Application number: 14160608.7
(22) Date of filing: 18.03.2014
(51) Int. Cl.: A47J 43/07

(54) **Kitchen device**
Küchenvorrichtung
Dispositif de cuisine

(43) Date of publication of application: 23.09.2015
(73) Proprietor: BSH Hausgeräte GmbH, 81739 München (DE)
(72) Inventor: Kos, Adrijana, 2242 Zg. Korena (SI); Kumer, Amadej, 3314 Braslovce (SI); Suen, Tomaz, 3311 Sempeter (SI); Breznik, Ales, 2000 Maribor (SI); Uplaznik, Marko, 3312 Prebold (SI); Spilak, Anton, 9223 Dobrovnik (SI)

(56) References cited:
- EP-A1- 1 880 647
- GB-A- 2 436 876

## Description

### Background of the invention

The present invention relates to the field of user control means for a kitchen device.

### State of the art

All kitchen devices, such a food processors, kitchen machines, multi cookers, juicers, mincers, choppers, bread makers etc., comprise user control means that allow the user to select functions and control operation of the device. Some of the mentioned user control means use only various buttons, knobs, switches, often in combination with indicator lights. Recently, the use of displays and electronic switching for facilitating conveying information back to the user has been increasing.

In EP 2001346, a solution is presented for a food processing kitchen appliance (eg., blender, mixer) comprising a casing containing an electric motor and an associated drive system coupled to a plurality of drive outlets associated with respective vessel supporting surfaces and capable of driving a food processing tool within a vessel, the vessel supporting surfaces comprising a plurality of support locations for receiving therein respective standing feet of a weighing device, at least one foot and respective support location comprising co-operating coupling elements of a signal transmission system for conveying to the casing signals provided by the weighing device so that the weight of the weighed ingredients may be displayed.; The cooperative coupling elements may be of the plug and socket connector type, or may be a contactless system utilizing infrared (IR) or radio-frequency (RF). The display may be an LCD display.

The above mentioned solution also includes a covering means to protect the display or alternatively a hinge mechanism for closing the display when not used.

The use of more sophisticated control protocols as well as an increasing number of functions in devices has led to cluttering of various control mechanisms. This often means that the housing of the device can hardly accommodate all the control means. Additionally, these control means can quickly be dirtied through the use of the kitchen device and the cleaning is very problematic.

EP1880647 (A1) discloses a food preparation arrangement provided with a receptacle, such as a bowl, for ingredients to be mixed or otherwise processed by means of a kitchen appliance; and with sensors for sensing the weight of the receptacle and its ingredients and generating electrical signals indicative of the sensed weight. The electrical signals, or signals derived from them, are sent to a display, remote from the receptacle, for displaying ingredient weight information derived from said output signals. The sensors may be integrated into the receptacle, and the display may be carried by the appliance or provided separately of both the receptacle and the kitchen appliance. The signals sent to the display may be transmitted by means of infra-red (IR) or radio-frequency (RF) signalling components.

### Problem to be solved

The object underlying the present invention is to provide an improvement in a user control means for a kitchen device.

### Solution according to the invention

In order to achieve the object underlying the invention, the present invention provides a kitchen device for processing of food ingredients according to claim 1. Advantageous embodiments that can be implemented by themselves or in combination are described in dependent claims.

According to an aspect of an invention, a kitchen device for processing of food ingredients comprising at least a motorized driving means, one or more connecting means for connection of various attachments, a user control means for controlling the operation of the kitchen device and a housing, wherein the user control means is movably attached to the housing and may be partially or completely stored within the housing is provided. Such a design allows for a bigger user control means than normal to be fitted to the kitchen appliance. The fact that the user control means may be stored within or adjacent to the housing provides additional safety for the user control means, such as a display, when the kitchen appliance is not used by lowering the danger of physical damage caused accidentally while performing other tasks in the kitchen.

The objective of the invention is achieved through improving the user control means by introducing a movable attachment mechanism of the user control means part to the housing which allows for safely storing of the user control means when it is not used. The user control means can in some embodiments be completely stored within the housing of the kitchen device therefore saving space.

### Embodiments of the invention

According to a preferred embodiment, the user control means is an interactive display. This is beneficial to the user as the communication, such as choosing programs, starting and stopping of the motor, changing speeds and similar, is not limited to the use of the conventional interaction means such as buttons, selection wheels and similar. The user can select operating parameters using an interactive interface with touch selection. This opens a multitude of possibilities for controlling the operation of the kitchen device, personalization and implementation of a more user-friendly design.

In another embodiment, the user control means is stored within the housing by using a drawer-like mechanism. A drawer like mechanism, meaning that the user control means can preferably be stored completely within the housing of the kitchen device, provides space saving as the only visible part of the mechanism when it is closed remains the outside face of the mechanism that can be designed to blend with the housing.

It is also conceivable that the user control means is stored within or adjacent to the housing by using a rotational mechanism, such as a hinge. The user control means may also be fitted to the housing in such a manner that it is folded adjacent to the housing in the closed position and it opens away from the housing when it is used. This provides protection for the usually comparatively large user control means, when it is not used, preventing possible physical damage to the user control means while other tasks in the kitchen are performed.

Furthermore, it may be preferable that the kitchen device comprises a mechanical or electronic locking mechanism that prevents operation of the kitchen device unless the user control means is positioned in an active position. To ensure safety of operation of the kitchen device, it is preferable to introduce an electronic or mechanical locking/unlocking mechanism which only allows any drive of the kitchen device to be activated when the user control means is properly positioned in the open position. This prevents accidental starting of the kitchen device in case the user control means is either stored completely or even if it is not fully closed or fully open.

In another embodiment, the user control means allows the user to control all the functions of the kitchen device. It is desired to control as many of the functions of the kitchen device as possible through the user control means. In a setting where the kitchen device is substantially independent of possible additional outside control means, the user control means should ideally control all the functions of the kitchen device. However, it is conceivable, that a function such as an on/off button or other specific functions that may be controlled by a button or similar for ease of use, may be positioned separate from the user control means to achieve improved safety.

Additionally, the user control means can comprise a movable holder and a detachable part with an interactive display that can be reversibly removed and mounted to the socket positioned in the movable holder. To perform some of the functions while the user is not within the reach of touching the kitchen device, it may be preferable to allow detachment of one part of the user control means from its base. In this way, the interactive part may be disconnected from the socket of the movable holder and used as a remote control by using various possible connection protocols. Naturally, care must be taken to ensure data transfer safety of such a setting as well as kitchen device operating safety considering the fact that the user may be some distance away from the device.

It is also conceivable, that the detachable part with interactive display can be transferred from one kitchen device to another. As the removable part of the user control interface is able to control the performance of functions on the kitchen device as well as store data regarding previous usage and user preferences and furthermore possibly communicate with the internet or other sources for service purposes or for acquiring recipes and new operating protocols, it is conceivable that such a device could be transferred from one kitchen device to another while retaining the data and functionality. The transfer might be between two devices of the same type or even between kitchen devices of different types (e.g. between a food processor and a juicer or similar).

In a further embodiment, the kitchen device may also be controlled remotely through interaction of a fully detached outside device with the user control means or directly with the electronics within the kitchen device. The outside remotely connected device may have the same or partial functionalities or possibly even additional functionalities as compared to the user control means.

In a preferred embodiment, the connections between the kitchen device, detachable part, detached outside device and/or the internet use Wi-Fi, Bluetooth, RFID, NFC or other similar communication protocols for interaction. The detached outside device would preferably use the known connection protocol, especially since the communication will need to be encrypted to provide safety of operation or solve the issue of safety through the short range of communication.

In another embodiment, the kitchen device is able to perform additional tasks, such as execution of recipes or service checks, when connection to the internet is established. While some similar functions (e.g. some basic recipes and their execution) may be already contained in the basic setting of the user control means, it is preferable that the user control means is able to establish connection with an outside source and be able to download new protocols from a broader database or execute checks of the state of the kitchen device by exchange of data with an outside server.

Preferably, the user control means includes a slot for an external memory card. To provide enough flexibility and data space expansion opportunities, the user control means may be fitted with a slot where an external memory card can be inserted. The card may also be transferred from one device to another for exchange of settings or user preferences. Additionally, when there is no connection to the server, such a memory card may also be used for obtaining data from the kitchen device by a service center without the need for transferring the whole kitchen device.

In a further embodiment, the kitchen device also comprises a weighing device. Incorporation of a weighing device can significantly improve the functionality of a kitchen device, especially when it is connected directly to and controlled by the same user control means. Additional functions include weighing of ingredients inside of the processing bowl, detecting changes in weight (spillage, foreign objects, ...), detecting and alerting for when the amount of an ingredient according to the executed recipe has been added, etc.

In another further embodiment, the kitchen device also comprises a heating element. Incorporation of a heating element can significantly improve the functionality of a kitchen device, especially when it is connected directly to and controlled by the same user control means. The heating function is often the prerequisite for execution of most of the recipes in the conventional sense of preparing (cooked) food ready for consumption.

Advantageous embodiments and developments which can be used individually or in combination with one another are the subject matter of the dependent claims.

### Brief description of the drawings

- Figure 1: depicts the kitchen device with a user control means in an open position;
- Figure 2: depicts a close-up view of the kitchen device with a drawer-like mechanism in an open position;
- Figure 3: depicts the kitchen device with a user control means in a closed position;
- Figure 4: is a schematic representation of the user control means which additionally comprises a completely detached outside device.

### Detailed description of the invention

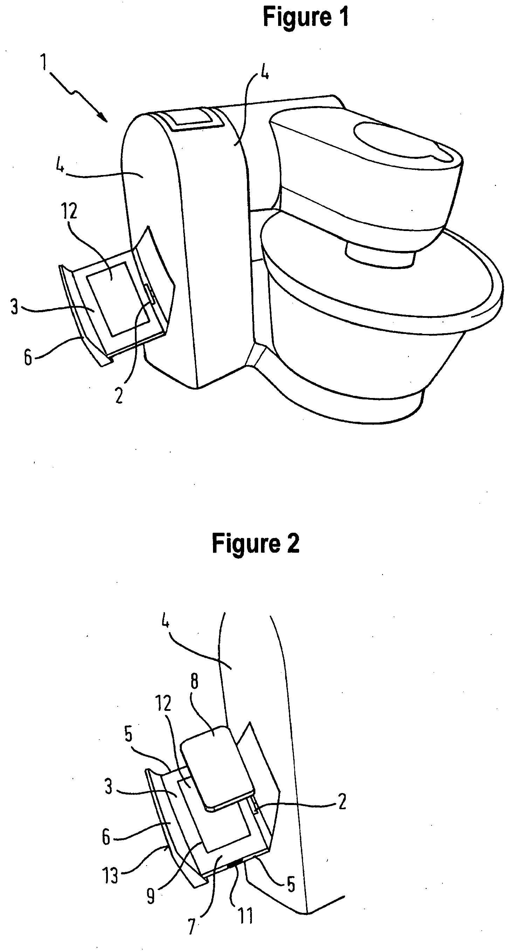

In Figure 1, the kitchen device 1 with the user control means 3 in the open position is shown. The user control means 3 comprises of a frame 6 and an interactive display 12. The interactive display 12 is preferably an LCD or OLED display, or similar. The use of an interactive display 12 is beneficial to the user as the communication, such as choosing programs, starting and stopping of the kitchen device 1, changing speeds and similar, is not limited to the use of the conventional interaction means such as buttons, knobs, switches and selection wheels. The user can select operating parameters using an interactive interface with touch selection. This opens a multitude of possibilities for controlling the operation of the kitchen device 1, personalization and implementation of a more user-friendly design. The user control means 3 may be connected to the electronics of the kitchen device 1 through a connecting means 2, such as cables, or alternatively through a wireless connection. This in turn requires the electronics of the kitchen device 1 to have such a wireless connection enabled as well.

The frame 6 of the user control means 3 is preferably made, at least in part, of the same material and with the same design as the housing 4 to seamlessly blend with it in the closed position. Alternatively, the frame 6 may be used as a design feature of the kitchen device 1. In the open position, the user control means 3 should be positioned ergonomically, so as to allow the user to interact with it in the simplest and most efficient manner possible. This may include the tilting of the user control means 3 to an angle that allows the user to see and touch the user control means 3 easily. It should also be positioned in the open position stably so as to prevent accidental closure or partial closure of the user control means 3 during operation. The stable positioning is not only a convenience feature as it may be linked to the safety mechanism preventing the kitchen device 1 from operating when the user control means 3 is not in the completely open position. It is preferable, that the interactive display 12 as a part of the user control means 3 is as large as possible to allow efficient information display and user interaction. The size is of course limited by the space available on/within the housing 4 and the cost calculation. Another limitation to the size of the user control means 3, that is the displacement from the housing 4 of the kitchen device 1 in the fully open position is the needed space to the side of the kitchen device 1 which could possibly interfere with other kitchen appliances. To ensure safety of operation of the kitchen device 1, it is preferable to introduce an electronic or mechanical locking/unlocking mechanism which only allows any drive of the kitchen device 1 to be activated when the user control means 3 is properly positioned in the open position. This prevents accidental starting of the kitchen device 1 in case the user control means 3 is either closed completely or even if it is not fully closed or fully open.

It is generally desired to control as many of the functions of the kitchen device 1 as possible through the user control means 3. In a setting where the kitchen device 1 is substantially independent of possible additional outside control devices 10, the user control means 3 should ideally control all the functions of the kitchen device 1. However, it is conceivable, that a function such as an on/off button or other specific functions that may be controlled by a button, switch, knob or similar for ease of use, may be positioned separate from the user control means 3 for additional safety. Some of the functions not conventionally connected with the motorized kitchen devices, such as weighing and heating functions may be readily incorporated in such a design to provide a broader functionality.

In Figure 2, a close-up of the drawer-like mechanism 5 is depicted. The drawer-like mechanism 5 is used in the sense that that the user control means 3 can preferably be stored completely within the housing 4 of the kitchen device 1. Such a setting provides space saving as the only visible part of the mechanism when it is closed remains the outside face 13 of the mechanism and the rest of the housing 4 is not cluttered with various control mechanisms such as buttons, knobs and similar. The said outside face 13 of the mechanism may be designed to optically blend with the housing 4.

Alternatively, the user control means 3 may also be fitted to the housing 4 in such a manner that in the closed position it is positioned (folded) in the close proximity of the housing 4. When it is used, it opens away from the housing 4 using a hinge or similar mechanism. The hinge mechanism may also be designed so as to provide the option of tilting the user control means 3 so as to allow the user to position it according to their preferred viewing angle.

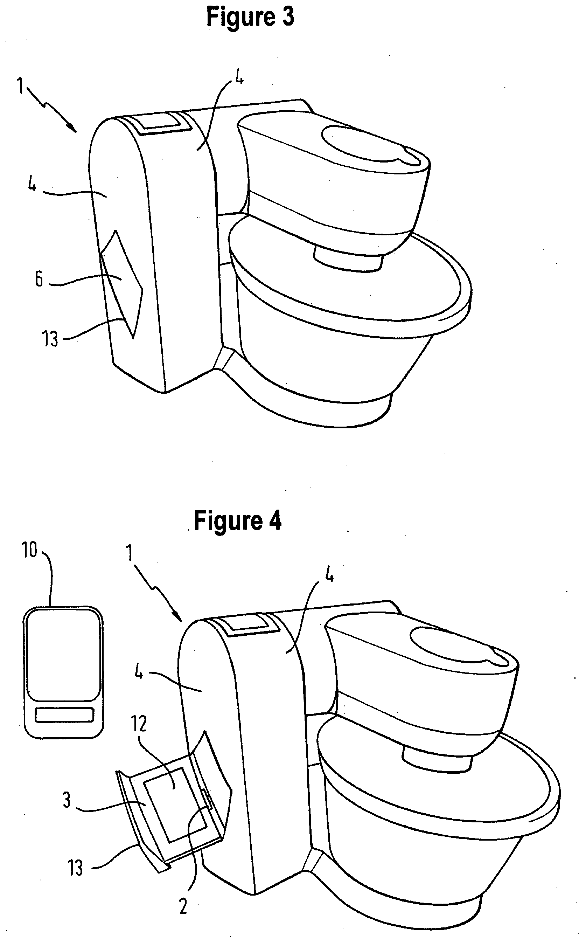

In figure 3, the kitchen device 1 with the user control means 3 in the completely closed position is shown. The fact that the user control means 3 may be stored within or adjacent to the housing 4 provides additional safety for the user control means as additional protection for the usually comparatively large user control means 3, when it is not used is provided, preventing possible physical damage to the user control means 3, especially the interactive display 12 while other tasks in the kitchen are performed. In the closed position, only the outside face 13 of the closing mechanism may be visible providing substantially seamless integration with the housing 4. Alternatively, the closing mechanism may be used as a design feature and/or remain partially revealed outside the housing 4 of the kitchen device 1. The opening of the closing mechanism may be effected by introducing one of the usual opening mechanisms (e.g. edge, indentation, push-click mechanism, and similar).

In Figure 4, a schematic representation of the user control means 3 which additionally comprises a completely detached outside device 10 is shown. To perform some of the functions while the user is not within the reach of touching the kitchen device 1, it may also be preferable to allow detachment of one part of the user control means 3 from its base. In this way, the interactive detachable part 8 could be disconnected from the socket 9 of the movable holder 7 and used as a remote control. The completely detached outside device 10 and/or detachable part 8 of the user control interface 3 communicate with the kitchen device 1 by using various possible connection protocols, such as Wi-Fi, Bluetooth, RFID, NFC. Naturally, care must be taken to ensure data transfer safety of such a setting as well as kitchen device 1 operating safety considering the fact that the user may be some distance away from the device. These issues are best solved by using data encrypted communication between the kitchen device 1 and the detachable part 8 or the outside device 10, or alternatively by utilizing the fact that some communication protocols e.g. RFID, NFC, Bluetooth and similar, are only possible when both connection points are within close proximity of each other. As the required proximity is meters or even centimeters, it would in such cases be reasonable to expect the user to be in visual contact with the kitchen device 1 and be able to control basic safety parameters such as whether or not the kitchen device 1 is in operation at the time. If, however the protocols are used that enable control of the device from further away, for example several meters, from behind obstacles and even from anywhere in case of an internet protocol, additional safety measures must be taken. These measures include data encryption and strict control for ensuring that the kitchen device 1 cannot be activated from a remote location without first verifying whether this is safe and/or alerting anyone that may possibly be in a physical contact with the kitchen device 1 at the time.
The kitchen device 1 may also be controlled remotely through interaction of a fully detached outside device 10 with the part of the user control means 3 connected to the housing 4 or even directly with the electronics within the kitchen device 1. It is therefore not necessary to physically connect the user control means 3 with the kitchen device 1. In addition to the user control means 3 mounted to the kitchen device 1, the kitchen device 1 could also be controlled through the use of an outside remotely connected device 10 with the same or partial functionalities as the user control means 3.

It is also conceivable, that the detachable part 8 with the interactive display 12 can be transferred from one kitchen device 1 to another. As the detachable part 8 of the user control interface 3 is able to control the performance of functions on the kitchen device 1 as well as store data regarding previous usage and user preferences and furthermore possibly communicate with the internet or other sources for service purposes or acquiring recipes and new operating protocols, it is conceivable that such a detachable part 8 could be transferred from one kitchen device 1 to another while retaining the data and functionality. The transfer might be between two kitchen devices 1of the same type or even between kitchen devices 1 of different types (e.g. between a food processor and a juicer or similar).

An important feature of the kitchen device 1, especially if connected to the internet, is its ability to perform additional and evolving tasks, such as execution of recipes or service checks. While some similar functions (e.g. some basic recipes and their execution) may be already contained in the basic setting of the user control means 3, it is preferable that the user control means 3 is able to establish connection with an outside source and be able to download new protocols from a broader database or execute checks of the state of the kitchen device 1 by exchange of data with an outside server. The possibility to import additional recipes may be especially beneficial for the kitchen devices 1 that include heating and/or weighing elements as not only passive display of the recipe for the user may be displayed on the user control means 3 interactive display 12, but an active guidance through the process with notifications for the user or even an automated food preparation process requiring only limited intervention by the user at preset time points is fully feasible. Additionally, the user control means 3 may also be able to learn a preferred working protocols previously used by the users and be able to reproduce them in the future. To allow greater flexibility, the user control means 3 may contain a slot 11 for an external memory card. The card may also be transferrable from one kitchen device 1 to another for exchange of settings or user preferences. Additionally, when there is no connection to the server, such a memory card may also be used for obtaining data from the kitchen device 1 by a service center without the need for transferring the whole kitchen device 1.

### Feature list

- 1: kitchen device
- 2: connecting means
- 3: user control means
- 4: housing
- 5: drawer-like mechanism
- 6: frame of the user control means
- 7: movable holder
- 8: detachable part
- 9: socket
- 10: outside device
- 11: slot for external memory card
- 12: interactive display
- 13: outside face of the mechanism

## Claims

1. A kitchen device (1) for processing of food ingredients, comprising at least a motorized driving means, one or more connecting means (2) for connection of various attachments, a user control means (3) for controlling the operation of the kitchen device (1) and a housing (4), **characterized in that** the user control means (3) is movably attached to the housing (4) and may be partially or completely stored within the housing (4).

2. The kitchen device (1) according to claim 1, **characterized in that** the user control means (3) is an interactive display (12).

3. The kitchen device (1) according to any of the previous claims, **characterized in that** the user control means (3) is stored within the housing (4) by using a drawer-like mechanism(5).

4. The kitchen device (1) according to claims 1 or 2, **characterized in that** the user control means (3) is stored within or adjacent to the housing (4) by using a rotational mechanism, such as a hinge.

5. The kitchen device (1) according to any of the previous claims, **characterized in that** the kitchen device (1) comprises a mechanical or electronic locking mechanism that prevents operation of the kitchen device (1) unless the user control means (3) positioned in an active position.

6. The kitchen device (1) according to any of the previous claims, **characterized in that** the user control means (3) allows the user to control all the functions of the kitchen device (1).

7. The kitchen device (1) according to any of the previous claims, **characterized in that** the user control means (3) comprises a movable holder (7) and a detachable part (8) with an interactive display (12) that can be reversibly removed and mounted to the socket (9) positioned in the movable holder (7).

8. The kitchen device (1) according to claim 7, **characterized in that** the detachable part (8) with interactive display (12) can be transferred from one kitchen device (1) to another.

9. The kitchen device (1) according to any of the previous claims, **characterized in that** the kitchen device (1) may also be controlled remotely through interaction of a fully detached outside device (10) with the user control means (3) or directly with the electronics within the kitchen device (1).

10. The kitchen device (1) according to any of the previous claims, **characterized in that** the connections between the kitchen device (1), detachable part (8), detached outside device (10) and/or the internet use Wi-Fi, Bluetooth, RFID, NFC or other similar communication protocols for interaction.

11. The kitchen device (1) according to any of the previous claims, **characterized in that** the kitchen device (1) is able to perform additional tasks, such as execution of recipes or service checks, when connection to the internet is established.

12. The kitchen device (1) according to any of the previous claims, **characterized in that** the user control means includes a slot (11) for an external memory card.

13. The kitchen device (1) according to any of the previous claims, **characterized in that** the kitchen device (1) also comprises a weighing device.

14. The kitchen device (1) according to any of the previous claims, **characterized in that** the kitchen device (1) also comprises a heating element.

15. The kitchen device (1) according to any of the previous claims, **characterized in that** the user control means (3) is an interactive display (12) allowing a user to select operating parameters including speed of a motor using an interactive interface with touch selection.

## Patentansprüche

1. Eine Küchenvorrichtung (1) zur Verarbeitung von Nahrungsmittelzutaten mit wenigstens einer motorischen Antriebseinrichtung, einer oder mehreren Anschlusseinrichtungen (2) für den Anschluss verschiedener Anbauteile, einer Benutzersteuereinrichtung (3) zur Steuerung des Betriebs der Küchenvorrichtung (1) und einem Gehäuse (4), **dadurch gekennzeichnet, dass** die Benutzersteuereinrichtung (3) beweglich an dem Gehäuse (4) abgebracht ist und vollständig oder teilweise in dem Gehäuse (4) untergebracht werden kann.

2. Küchenvorrichtung (1) nach Anspruch 1, **dadurch gekennzeichnet, dass** die Benutzersteuereinrichtung (3) eine interaktive Anzeige (12) ist.

3. Küchenvorrichtung (1) nach einem der vorhergehenden Ansprüche, **dadurch gekennzeichnet, dass** die Benutzersteuereinrichtung (3) unter Verwendung eines schubladenartigen Mechanismus (5) in dem Gehäuse (4) untergebracht ist.

4. Küchenvorrichtung (1) nach Anspruch 1 oder 2, **dadurch gekennzeichnet, dass** die Benutzersteuereinrichtung (3) unter Verwendung eines Drehmechanismus, beispielsweise eines Scharniers, in oder neben dem Gehäuse (4) untergebracht ist.

5. Küchenvorrichtung (1) nach einem der vorhergehenden Ansprüche, **dadurch gekennzeichnet, dass** die Küchenvorrichtung (1) einen mechanischen oder elektronischen Sperrmechanismus aufweist, der den Betrieb der Küchenvorrichtung (1) verhindert, wenn die Benutzersteuereinrichtung (3) nicht in einer aktiven Stellung positioniert ist.

6. Küchenvorrichtung (1) nach einem der vorhergehenden Ansprüche, **dadurch gekennzeichnet, dass** die Benutzersteuereinrichtung (3) dem Benutzer die Steuerung aller Funktionen der Küchenvorrichtung (1) ermöglicht.

7. Küchenvorrichtung (1) nach einem der vorhergehenden Ansprüche, **dadurch gekennzeichnet, dass** die Benutzersteuereinrichtung (3) einen beweglichen Halter (7) und einen lösbaren Teil (8) mit einer interaktiven Anzeige (12) aufweist, der reversibel entfernt und an der in dem beweglichen Halter (7) positionierten Buchse (9) montiert werden kann.

8. Küchenvorrichtung (1) nach Anspruch 7, **dadurch gekennzeichnet, dass** der lösbare Teil (8) mit der interaktiven Anzeige (12) von einer Küchenvorrichtung (1) zu einer anderen überführt werden kann.

9. Küchenvorrichtung (1) nach einem der vorhergehenden Ansprüche, **dadurch gekennzeichnet, dass** die Küchenvorrichtung (1) durch Zusammenwirken einer vollständig gelösten externen Vorrichtung (10) mit der Benutzersteuereinrichtung (3) oder direkt mit der Elektronik in der Küchenvorrichtung (1) auch ferngesteuert werden kann.

10. Küchenvorrichtung (1) nach einem der vorhergehenden Ansprüche, **dadurch gekennzeichnet, dass** die Verbindungen zwischen der Küchenvorrichtung (1), dem lösbaren Teil (8), der gelösten externen Vorrichtung (10) und/oder dem Internet WLAN, Bluetooth, RFID, NFC oder andere ähnliche Kommunikationsprotokolle für das Zusammenwirken verwenden.

11. Küchenvorrichtung (1) nach einem der vorhergehenden Ansprüche, **dadurch gekennzeichnet, dass** die Küchenvorrichtung (1) in der Lage ist, zusätzliche Aufgaben zu erledigen, beispielsweise die Abarbeitung von Rezepten oder die Durchführung von Service-Überprüfungen, wenn eine Verbindung zum Internet hergestellt ist.

12. Küchenvorrichtung (1) nach einem der vorhergehenden Ansprüche, **dadurch gekennzeichnet, dass** die Benutzersteuereinrichtung einen Schlitz (11) für eine externe Speicherkarte aufweist.

13. Küchenvorrichtung (1) nach einem der vorhergehenden Ansprüche, **dadurch gekennzeichnet, dass** die Küchenvorrichtung (1) auch eine Wägeeinrichtung aufweist.

14. Küchenvorrichtung (1) nach einem der vorhergehenden Ansprüche, **dadurch gekennzeichnet, dass** die Küchenvorrichtung (1) auch ein Heizelement aufweist.

15. Küchenvorrichtung (1) nach einem der vorhergehenden Ansprüche, **dadurch gekennzeichnet, dass** die Benutzersteuereinrichtung (3) eine interaktive Anzeige (12) ist, die es einem Benutzer ermöglicht, Betriebsparameter einschließlich der Geschwindigkeit eines Motors unter Verwendung einer interaktiven Schnittstelle mit Berührungsauswahl auszuwählen.

## Revendications

1. Appareil de cuisine (1) pour la préparation de denrées alimentaires, comprenant au moins un moyen d'entraînement motorisé, un ou plusieurs moyens de connexion (2) pour la connexion de divers accessoires, un moyen de commande pour utilisateur (3) afin de commander le fonctionnement de l'appareil de cuisine (1) et une carcasse (4), **caractérisé en ce que** le moyen de commande pour utilisateur (3) est fixé de manière mobile sur la carcasse (4) et peut se loger en partie ou intégralement au sein de la carcasse (4).

2. Appareil de cuisine (1) selon la revendication 1, **caractérisé en ce que** le moyen de commande pour utilisateur (3) est un écran interactif (12).

3. Appareil de cuisine (1) selon l'une quelconque des revendications précédentes, **caractérisé en ce que** le moyen de commande pour utilisateur (3) est logé au sein de la carcasse (4) en utilisant un mécanisme semblable à un tiroir (5).

4. Appareil de cuisine (1) selon les revendications 1 ou 2, **caractérisé en ce que** le moyen de commande pour utilisateur (3) est logé au sein de la carcasse (4) ou de manière adjacente à celle-ci en utilisant un mécanisme rotatif, par exemple une charnière.

5. Appareil de cuisine (1) selon l'une quelconque des revendications précédentes, **caractérisé en ce que** l'appareil de cuisine (1) comprend un mécanisme de verrouillage mécanique ou électronique qui empêche le fonctionnement de l'appareil de cuisine (1) tant que le moyen de commande pour utilisateur (3) n'est pas placé dans une position active.

6. Appareil de cuisine (1) selon l'une quelconque des revendications précédentes, **caractérisé en ce que** le moyen de commande pour utilisateur (3) permet à l'utilisateur de commander toutes les fonctions de l'appareil de cuisine (1).

7. Appareil de cuisine (1) selon l'une quelconque des revendications précédentes, **caractérisé en ce que** le moyen de commande pour utilisateur (3) comprend un support mobile (7) et une partie amovible (8) avec un écran interactif (12) pouvant être enlevé de manière réversible et monté sur le socle (9) positionné dans le support mobile (7).

8. Appareil de cuisine (1) selon la revendication 7, **caractérisé en ce que** la partie amovible (8) avec écran interactif (12) peut être déplacée d'un appareil de cuisine (1) vers un autre.

9. Appareil de cuisine (1) selon l'une quelconque des revendications précédentes, **caractérisé en ce que** l'appareil de cuisine (1) peut également se commander à distance via l'interaction d'un appareil externe intégralement distinct (10) avec le moyen de commande pour utilisateur (3) ou directement avec l'électronique intégrée à l'appareil de cuisine (1).

10. Appareil de cuisine (1) selon l'une quelconque des revendications précédentes, **caractérisé en ce que** les connexions entre l'appareil de cuisine (1), la partie amovible (8), l'appareil externe intégralement distinct (10) et/ou internet utilise le Wi-Fi, le bluetooth, le RFID, le NFC ou d'autres protocoles de communication semblables pour l'interaction.

11. Appareil de cuisine (1) selon l'une quelconque des revendications précédentes, **caractérisé en ce que** l'appareil de cuisine (1) est capable d'effectuer des tâches supplémentaires comme la réalisation de recettes ou des vérifications d'entretien, lorsque la connexion à internet est établie.

12. Appareil de cuisine (1) selon l'une quelconque des revendications précédentes, **caractérisé en ce que** le moyen de commande pour utilisateur englobe une fente (11) pour une carte mémoire externe.

13. Appareil de cuisine (1) selon l'une quelconque des revendications précédentes, **caractérisé en ce que** l'appareil de cuisine (1) comprend également un dispositif de pesage.

14. Appareil de cuisine (1) selon l'une quelconque des revendications précédentes, **caractérisé en ce que** l'appareil de cuisine (1) comprend également un élément chauffant.

15. Appareil de cuisine (1) selon l'une quelconque des revendications précédentes, **caractérisé en ce que** le moyen de commande pour utilisateur (3) est un écran interactif (12) permettant à un utilisateur de sélectionner des paramètres de fonctionnement, y compris une vitesse d'un moteur, à l'aide d'une interface interactive avec sélection tactile.
